# EUROPEAN PATENT APPLICATION

(11) **EP 2 772 843 A1**
(43) Date of publication of application: **03.09.2014**
(21) Application number: 13753080.4
(22) Date of filing: 12.07.2013
(51) Int. Cl.: G06F 3/0488

(54) **METHOD FOR CONTROLLING SYSTEM BAR OF USER EQUIPMENT AND USER EQUIPMENT THEREOF**

(30) Priority: 16.07.2012 CN 201210245439; 10.07.2013 CN 201310288774
(71) Applicant: Huawei Device Co., Ltd., Longgang District Shenzhen Guangdong 518129 (CN)
(72) Inventor: DING, Yi, Shenzhen Guangdong 518129 (CN); WU, Bin, Shenzhen Guangdong 518129 (CN); HE, Feng, Shenzhen Guangdong 518129 (CN); YIN, Hang, Shenzhen Guangdong 518129 (CN); KE, Yuandan, Shenzhen Guangdong 518129 (CN); GUO, Zejin, Shenzhen Guangdong 518129 (CN)
(74) Representative: Haley, Stephen
(86) International application number: PCT/CN2013/079291
(87) International publication number: WO 2014/012462

(57) **Abstract**

Embodiments of the present invention provide a method for controlling a system bar of a user equipment, and a user equipment. The method includes: detecting a display status of the system bar, in which the system bar is used to indicate system level information or provide a system level virtual operation button, and is presented in a designated display area in a screen; and when the system bar is presented on the screen of the user equipment, and the presented system bar includes a hidden button, receiving a first input used to select the hidden button and input by an input unit to hide the system bar; or when the system bar is not presented on the screen of the user equipment, receiving a second input which is input by the input unit to present the system bar, in which the second input is a track moving from an edge of the screen to the center of the screen. In the foregoing technical solutions, by flexibly invoking or hiding a system bar integrated with various information and/or convenient buttons, the screen can be used to display content to the greatest extent, so as to improve the utilization rate of the screen.

## Description

### TECHNICAL FIELD

The present invention relates to the field of a terminal equipment, and in particular, to a method for controlling a system bar of a user equipment, and a user equipment.

### BACKGROUND

With development of sciences and technologies, display applications of a terminal equipment (whose English is Terminal Equipment) which is also referred to as a user equipment (whose English is a User Equipment, UE for short) are increasingly rich and colorful, and meanwhile a mobile intelligent apparatus such as a mobile phone, a mobile tablet apparatus (whose English is PAD or Tablet) and a mobile multimedia machine and the like in the terminal equipment becomes more compact. In order to leave a larger space to visual enjoyment, the user equipment gradually adopts a maximized screen, and further reduces physical keys on a plane same as that of the screen. However, on the user equipment, it is always required to display some current status information or provide some operable buttons to perform operations at each level. How to balance visual enjoyment and application demands of a user needs to solve a problem that the utilization rate of the screen is low.

### SUMMARY

In view of this, embodiments of the present invention provide a method for controlling a system bar of a user equipment, and a user equipment, so as to solve the problem that the utilization rate of a screen is low.

In a first aspect, a method for controlling a system bar of a user equipment is provided, where the method includes: detecting a display status of the system bar, in which the system bar is used to indicate system level information or provide a system level virtual operation button, and is presented in a designated display area in a screen; and when the system bar is presented on the screen of the user equipment, and the presented system bar includes a hidden button, receiving a first input used to select the hidden button and input by an input unit to hide the system bar, in which the hidden button is used to hide the system bar in the screen of the user equipment; or when the system bar is not presented on the screen of the user equipment, receiving a second input which is input by the input unit to present the system bar, in which the second input is a track moving from an edge of the screen to the center of the screen, and used to present the system bar in the screen of the user equipment.

In a first possible implementation manner, after the receiving a first input for selecting the hidden button and input by an input unit, the method further includes: hiding, by the screen, the system bar, and presenting, by the screen, content associated with the currently presented content in the display area of the system bar; or hiding, by the screen, the system bar, and zooming in and presenting, by the screen, the currently presented content.

In a second possible implementation manner, after the receiving a second input which is input by an input unit, the method further includes: presenting, by the screen, the system bar, and adaptively zooming out and presenting, by the screen, the currently presented content; or presenting, by the screen, the system bar, and covering, by the screen, a presented part of the currently presented content by using the system bar.

With reference to the first aspect or any possible implementation manner of the first aspect, in a third possible implementation manner, the display area of the system bar is located in a designated area expanding upward from a lower edge of the screen.

With reference to the first aspect or any possible implementation manner of the first aspect, in a fourth possible implementation manner, that the second input is a track moving from an edge of the screen to the center of the screen includes: that the second input is a track moving from bottom to top by taking the lower edge of the screen as a starting point.

With reference to the first aspect or any possible implementation manner of the first aspect, in a fifth possible implementation manner, at the time of receiving the second input, a current application is screened from receiving the second input, so as to prevent a response of the current application to the second input from being triggered.

With reference to the first aspect or any possible implementation manner of the first aspect, in a sixth possible implementation manner, the screen of the user equipment is a touch-type input screen.

In a second aspect, a method for controlling a system bar of a user equipment is provided, where the method includes: detecting a display status of the system bar, in which the system bar is used to indicate system level information or provide a system level virtual operation button, and is presented in a designated display area in a screen; and when the system bar is presented on the screen of the user equipment, and time during which the system bar is presented on the screen of the user equipment reaches predetermined time, hiding the system bar in the screen of the user equipment; or when the system bar is not presented on the screen of the user equipment, receiving a second input to present the system bar, in which the second input is a track moving from an edge of the screen to the center of the screen, and used to present the system bar in the screen of the user equipment.

In a first possible implementation manner, that time during which the system bar is presented on the screen of the user equipment reaches predetermined time includes: that time during which the system bar is presented on the screen of the user equipment reaches predetermined time; and/or that the system bar does not receive any input in the predetermined time.

In a second possible implementation manner, the hiding the system bar in the screen of the user equipment includes: hiding, by the screen, the system bar, and presenting, by the screen, content associated with the currently presented content in the display area of the system bar; or hiding, by the screen, the system bar, and zooming in and presenting, by the screen, the currently presented content.

In a third possible implementation manner, after the receiving a second input which is input by an input unit, the method further includes: presenting, by the screen, the system bar, and adaptively zooming out and presenting, by the screen, the currently presented content; or presenting, by the screen, the system bar, and covering, by the screen, a presented part of the currently presented content by using the system bar.

With reference to the first aspect or any possible implementation manner of the first aspect, in a fourth possible implementation manner, the display area of the system bar is located in a designated area expanding upward from a lower edge of the screen.

With reference to the first aspect or any possible implementation manner of the first aspect, in a fifth possible implementation manner, that the second input is a track moving from an edge of the screen to the center of the screen includes: that the second input is a track moving from bottom to top by taking the lower edge of the screen as a starting point.

With reference to the first aspect or any possible implementation manner of the first aspect, in a sixth possible implementation manner, at the time of receiving the second input, a current application is screened from receiving the second input, so as to prevent a response of the current application to the second input from being triggered.

With reference to the first aspect or any possible implementation manner of the first aspect, in a seventh possible implementation manner, the screen of the user equipment is a touch-type input screen.

In a third aspect, a user equipment is provided, including a display unit, a detecting unit, a hiding unit, an invoking unit and an input unit, in which the display unit is configured to present a man-machine interaction interface of the user equipment according to information sent by the hiding unit and the invoking unit; the input unit is configured to receive an external input to generate a first input and a second input to be respectively sent to the hiding unit and the invoking unit; the detecting unit is configured to detect a display status of the system bar and send the detected display status to the hiding unit or the invoking unit, in which the system bar is used to indicate system level information or provide a system level virtual operation button, and is presented in a designated display area in the display unit; and the hiding unit is configured to receive, when the detecting unit detects the display status of the system bar sent when the system bar is presented on the display unit of the user equipment and the presented system bar includes a hidden button, a first input used to select the hidden button and input by the input unit to send information to the display unit so that the display unit hides the system bar, in which the hidden button is used to hide the system bar in the display unit of the user equipment; or configured to hide the system bar in the display unit of the user equipment when the detecting unit detects that the system bar is presented on the display unit of the user equipment and time during which the system bar is presented on the screen of the user equipment reaches predetermined time; or the invoking unit is configured to receive, when the detecting unit detects the display status of the system bar sent when the system bar is not presented on the display unit of the user equipment, a second input which is input by the input unit to send information to the display unit so that the display unit displays the system bar, in which the second input is a track moving from an edge of the display unit to the center of the display unit, and is used to present the system bar in the display unit of the user equipment.

In a first possible implementation manner, the information sent by the hiding unit is received, the display unit hides the system bar, and the display unit presents content associated with the currently presented content in the display area of the system bar; or the information sent by the hiding unit is received, the display unit hides the system bar, and the display unit zooms in and presents the currently presented content.

In a second possible implementation manner, the information sent by the invoking unit is received, the display unit presents the system bar, and the display unit adaptively zooms out and presents the currently presented content; or the information sent by the invoking unit is received, the display unit presents the system bar, and the display unit covers a presented part of the currently presented content by using the system bar.

With reference to the second aspect or any possible implementation manner of the second aspect, in a third possible implementation manner, the display area of the system bar presented by the display unit is located in a designated area expanding upward from a lower edge of the display unit.

With reference to the second aspect or any possible implementation manner of the second aspect, in a fourth possible implementation manner, the second input used by the invoking unit is a track moving from bottom to top by taking the lower edge of the display unit as a starting point.

With reference to the second aspect or any possible implementation manner of the second aspect, in a fifth possible implementation manner, the user equipment further includes a screening unit, in which the screening unit is configured to screen, at the time of receiving the second input sent by the input unit, a current application from receiving the second input, so as to prevent a response of the current application to the second input from being triggered.

With reference to the second aspect or any possible implementation manner of the second aspect, in a sixth possible implementation manner, the display unit of the user equipment is a touch-type input screen.

In the foregoing technical solutions, by flexibly invoking or hiding a system bar integrated with various information and/or convenient buttons, the screen can be used to display content to the greatest extent, so as to improve the utilization rate of the screen, thereby improving the user experience.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1A to FIG. 1C are schematic diagrams of a system bar of a user equipment in an embodiment of the present invention;
FIG. 2 is a schematic flow chart of a method for controlling a system bar of a user equipment according to an embodiment of the present invention;
FIG. 3 is a schematic flow chart of a method for controlling a system bar of a user equipment according to an embodiment of the present invention;
FIG. 4A and FIG. 4B are schematic screenshots of a screen of a user equipment according to an embodiment of the present invention;
FIG. 5A and FIG. 5B are schematic screenshots of a screen of a user equipment according to another embodiment of the present invention;
FIG. 6 is a schematic flow chart of a method for controlling a system bar of a user equipment according to another embodiment of the present invention;
FIG. 7 is a schematic flow chart of a method for controlling a system bar of a user equipment according to another embodiment of the present invention;
FIG. 8A and FIG. 8B are schematic screenshots of a screen of a user equipment according to another embodiment of the present invention;
FIG. 9 is a schematic block diagram of a user equipment according to an embodiment of the present invention; and
FIG. 10 is a schematic block diagram of a user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The wording "and/or" in this document merely describes an association between associated objects, indicating that three relationships may exist, for example, A and/or B may indicate three situations: only A exists, A and B exist at the same time, and only B exists. In addition, the character "/" in this document usually represents that the former and later associated objects are in a "or" relationship.

A system bar in embodiments of the present invention refers to an operation area which is on a terminal equipment and which is used to perform a system level operation, and provide system level status information, event information and the like, and a system level operation button on the system bar can replace the function of a physical key. Similarly, some operation bars used to place operation keys, some navigation bars used to place navigation keys and the like all belong to the protection scope of the embodiments of the present invention.

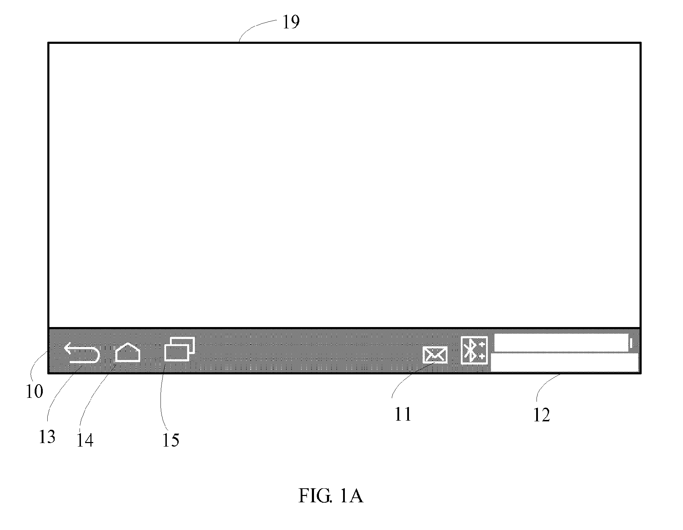

FIG. 1A is a schematic diagram of a system bar 10 of a user equipment in an embodiment of the present invention. A lower location of a screen 19 of a display of the user equipment includes the schematic system bar 10. The system bar 10 is used to indicate system level information or provide a system level virtual operation button, and may be presented in a designated display area in the screen. For example, the system bar can provide a service of a virtual operation button such as new event information 11, status information 12 of the user equipment, returning to a previous-level interface 13, getting back to a main interface 14 and/or entering system setting 15, and the service is initially set by the system of the user equipment. By utilizing the system bar, physical keys of the user equipment can be further reduced. However, the system bar is presented on an overwhelming majority of interfaces, so although the display effect of the system bar can be transparent, a part of display resources of the screen are still occupied. For this, an embodiment of the present invention provides a method for controlling a system bar of a user equipment, so that the utilization rate of the screen can be maximally improved, so as to provide better user experience for a user.

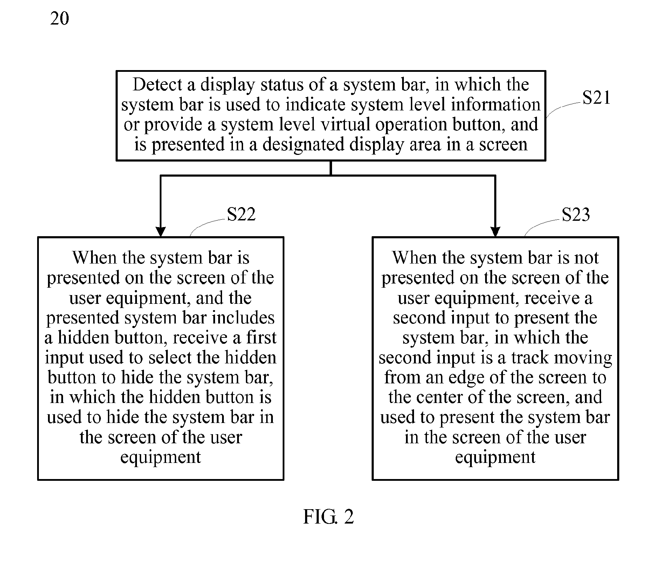

FIG. 2 is a schematic flow chart of a method 20 for controlling a system bar of a user equipment according to an embodiment of the present invention. The method 20 includes the following content.

S21: Detect a display status of the system bar, in which the system bar is used to indicate system level information or provide a system level virtual operation button, and is presented in a designated display area in a screen.

There are two types of display statuses of the system bar, including: being presented on the screen of the user equipment and being not presented on the screen of the user equipment. The display area presented in the system bar can be an area extending from an edge of the screen to the center of the screen, such as a rectangular area extending upward from a lower bottom side of an edge of the screen, and both the left and right sides of the rectangular area can be aligned with both the left and right sides of an edge of the screen.

S22: When the system bar is presented on the screen of the user equipment, and the presented system bar includes a hidden button, receive a first input used to select the hidden button to hide the system bar, in which the hidden button is used to hide the system bar in the screen of the user equipment.

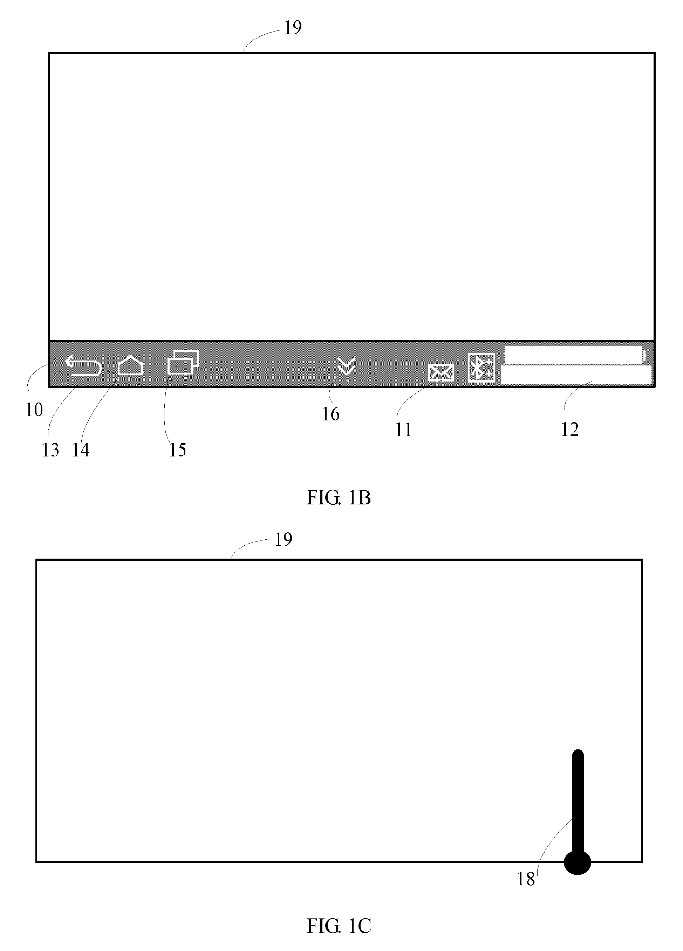

Referring to FIG. 1B, the system bar 10 presented on the screen 19 includes a hidden button 16.

Alternatively, S23: when the system bar is not presented on the screen of the user equipment, receive a second input to present the system bar, in which the second input is a track moving from an edge of the screen to the center of the screen, and used to present the system bar in the screen of the user equipment.

Referring to FIG. 1C, a second input 18 is a track moving from any point on an edge of the screen 19 to the center of the screen. A threshold can be set for the length of the track, so as to avoid a faulty operation. When the user equipment receives the second input, the system bar 10 shown in FIG. 1B is presented.

In the method for controlling a system bar of a user equipment provided by the embodiment of the present invention, by flexibly invoking or hiding a system bar integrated with various information and/or convenient buttons, the screen can be used to display content to the greatest extent, so as to improve the utilization rate of the screen, thereby improving the user experience.

Optionally, after the receiving a first input for selecting the hidden button and input by an input unit, the method further includes: hiding, by the screen, the system bar, and presenting, by the screen, content associated with the currently presented content in the display area of the system bar; or hiding, by the screen, the system bar, and zooming in and presenting, by the screen, the currently presented content.

Optionally, after the receiving a second input which is input by an input unit, the method further includes: presenting, by the screen, the system bar, and adaptively zooming out and presenting, by the screen, the currently presented content; or presenting, by the screen, the system bar, and covering, by the screen, a presented part of the currently presented content by using the system bar.

Optionally, the display area of the system bar is located in a designated area expanding upward from a lower edge of the screen.

Optionally, that the second input is a track moving from an edge of the screen to the center of the screen includes: that the second input is a track moving from bottom to top by taking the lower edge of the screen as a starting point.

Optionally, at the time of receiving the second input, a current application is screened from receiving the second input, so as to prevent a response of the current application to the second input from being triggered.

Optionally, the screen of the user equipment is a touch-type input screen.

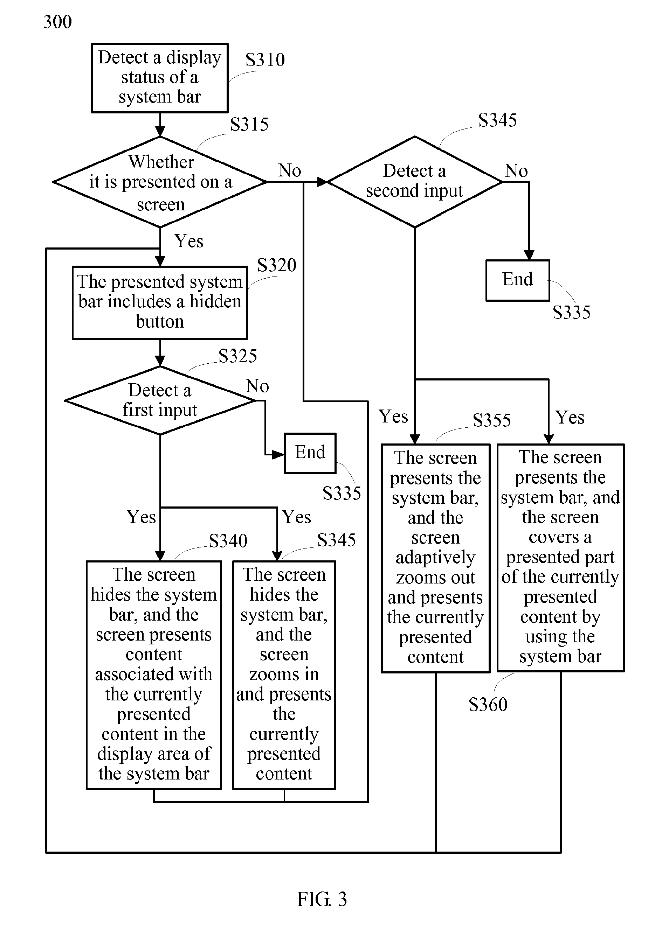

FIG. 3 is a schematic flow chart of a method 300 for controlling a system bar of a user equipment according to an embodiment of the present invention. The presentation method 300 includes the following content.

S310: Detect a display status of a system bar.

S315: Determine whether the system bar is presented on a screen. If the system bar is presented on the screen, that is, "yes" in S315, S320 is executed. If the system bar is not presented on the screen, that is, "no" in S315, the step S345 is executed.

S320: The system bar presented on the screen includes a hidden button.

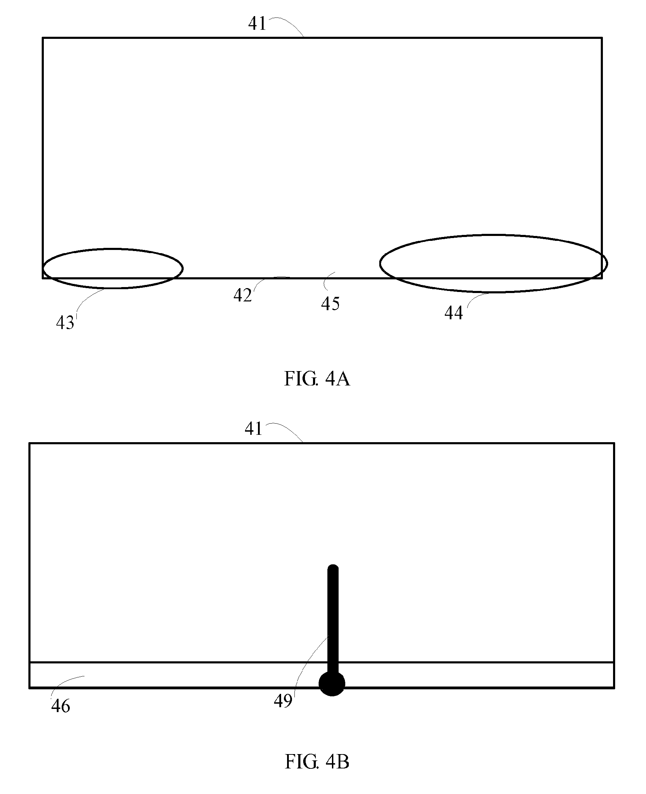

Referring to FIG. 4A, FIG. 4A is a first schematic screenshot of a screen of a user equipment according to an embodiment of the present invention. A screen 41, a system bar 42, and a plurality of schematic system level virtual operation buttons 43 and system level information 44 included by the system bar are shown in FIG. 4. In addition, the presented system bar further includes a hidden button 45. By selecting the hidden button, the system bar can be hidden, that is, the system bar is hidden in the screen of the user equipment.

S325: Detect a first input.

The first input is an input used to select the hidden button 45. When the first input is detected, that is, "yes" in S325, S340 or S345 is executed. If the first input is not detected, that is, "no" in S325, S335 is executed. Optionally, when the screen of the user equipment is a touch-type input screen, the screen is both a display equipment and an input equipment. A click input performed by the user on the hidden button 45 on the screen is an external input used to generate the first input and received by the input equipment of the user equipment.

S335: End. In the step, the presentation method of the system bar ends, and the current display content on the screen remains unchanged.

S340: The screen hides the system bar, and the screen presents content associated with the currently presented content in the display area of the system bar.

In FIG. 4A, the currently presented content of the screen is a list, and a part of content 46 shielded exists in the display area of the system bar 42. After the first input is detected through S325, reference is made to FIG. 4B. FIG. 4B is a second schematic screenshot of a screen of a user equipment according to an embodiment of the present invention. It can be seen from FIG. 4B that, some other content 46 of the list is presented in the area shielded by the display area of the system bar 42 in FIG. 4A, so that the user can utilize the screen maximally to present content, so as to improve user experience.

Alternatively, S345: the screen hides the system bar, and the screen zooms in and presents the currently presented content.

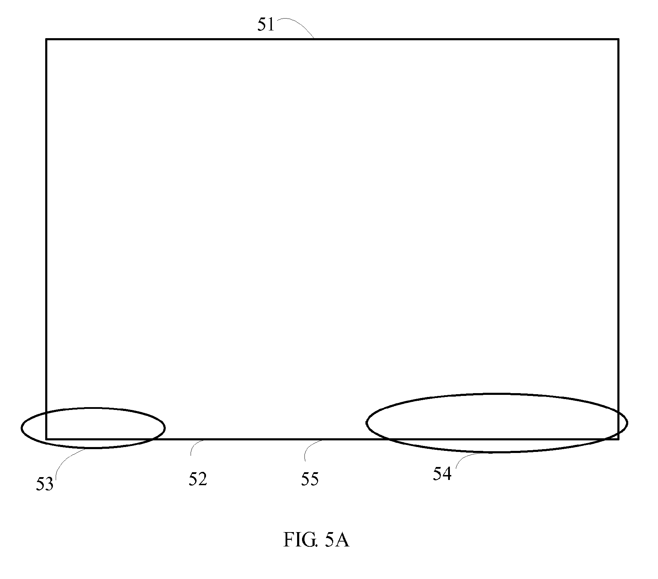

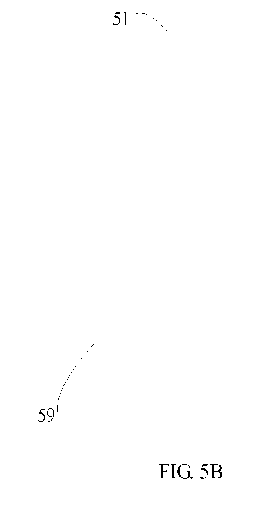

FIG. 5A is a third schematic screenshot of a screen of a user equipment according to another embodiment of the present invention. A screen 51, a system bar 52, and a schematic system level virtual operation button 53 and system level information 54 included by the system bar are shown in FIG. 5 likewise. In addition, the presented system bar further includes a hidden button 55. Content schematically presented in the drawing is a photograph, which is fully presented on the upper interface of the display area of the system bar. After the first input is detected through S325, reference is made to FIG. 5B. FIG. 5B is a fourth schematic screenshot of a screen of a user equipment according to an embodiment of the present invention. It can be seen from FIG. 5B that, the currently presented content in FIG. 5A, that is, the photograph, is zoomed in and presented, so that the user can utilize the screen maximally to present the current content, so as to improve user experience.

After the first input is detected, a presentation result in S340 and a presentation result in S345 differ. The difference is that preset presentation results are different because the currently presented content is different. Similar to the list of FIG. 4A, the currently presented content can further include an Email, a short message, an address book or a webpage. The presentation method after the first input is received is already preset for the interface including the foregoing content, so the presentation result shown in FIG. 4B is presented in S340. Similarly, similar to the photograph of FIG. 5A, the currently presented content can further include a calendar or a video. The presentation method after the first input is received is already preset for the interface including the foregoing content, so the presentation result shown in FIG. 5B is presented in S340.

Specifically, for the situation of S345, when the system bar is hidden, the currently presented content is abruptly zoomed in and presented, but the system bar may move downward slowly until it is hidden, so as to result in a problem of inconsistent animations, thereby influencing user experience. The returning animation of the system bar can be set to 0 through a method of directly modifying the selectAnimationLw (selectAnimationLw) parameter of the PhoneWindowManager (PhoneWindowManager), so that an application window and the system bar are adjusted in place simultaneously.

After step S340 or S345, the system bar is hidden on the screen, which is the same as the circumstance of "no" in S315, and subsequently S345 is executed. The foregoing procedure can be executed cyclically.

S345: Detect a second input.

The second input is an input used to present the system bar in the screen of the user equipment and defined in the embodiment of the present invention. The second input is a track moving from an edge of the screen to the center of the screen. Optionally, the second input approximating to the use habit of a user may be a track moving from bottom to top by taking the lower edge of the screen as a starting point, as 49 in FIG. 4A and 59 in FIG. 5A. Similarly, the second input can be a track moving from top to bottom by taking the topmost edge of the screen as a starting point, or a track moving from left to right by taking the leftmost side edge of the screen as a starting point, or a track moving from right to left by taking the rightmost side edge of the screen as a starting point.

If the screen of the user equipment is a touch-type input screen, the second input is a section of a touch track extending to the center of the screen by taking any point on an edge of the screen as a starting point.

When the second input is detected, that is, "yes" in S345, S355 or S360 is executed. If the second input is not detected, that is, "no" in S345, S335 is executed. S355: The screen presents the system bar, and the screen adaptively zooms out and presents the currently presented content. Step S345 and step S355 are executed in sequence, and reference can be made to presentation changes in FIG. 5B and FIG. 5A. When the system bar appears on the screen, the user can conveniently perform a further operation, or view relevant information.

S360: The screen presents the system bar, and the screen covers a presented part of the currently presented content by using the system bar. Step S345 and step S360 are executed in sequence, and reference can be made to presentation changes in FIG. 4B and FIG. 4A. Referring to FIG. 4A, after the second input is received, the presentation manner of the currently presented content is not changed, and only the part of content 46 located in the display area of the system bar in FIG. 4B is hidden in FIG. 4A.

After the second input is detected, a presentation result in S355 and a presentation result in S360 differ. The difference is that preset presentation results are different because the currently presented content is different. Similar to the list of FIG. 4B, the currently presented content can further include an Email, a short message, an address book or a webpage. The presentation method after the second input is received is already preset for the interface including the foregoing content, so the presentation result shown in FIG. 4A is presented in S360. Similarly, similar to the photograph of FIG. 5B, the currently presented content can further include a calendar or a video. The presentation method after the second input is received is already preset for the interface including the foregoing content, so the presentation result shown in FIG. 5A is presented in S355.

Specifically, for the situation of S355, when the system bar is displayed, the currently presented content is abruptly shrunk, and a black edge is left, but the system bar may move upward slowly until it is fully presented, so as to result in a problem of inconsistent animations, thereby influencing user experience. The returning animation of the system bar can be set to 0 through a method of directly modifying the selectAnimationLw parameter of the PhoneWindowManager, so that an application window and the system bar are adjusted in place simultaneously.

After step S355 or S360, the screen presents the system bar, which is the same as the circumstance of "yes" in S315, and subsequently S320 is executed. The foregoing procedure can be executed cyclically.

In addition, when the user initiates the second input, after the NavigationBarPolicy (NavigationBarPolicy) recognizes a gesture, the system bar may be triggered and popped out, but the second input may also be sent to current active applications simultaneously. If at this time, there is a key at a location where the user raises a hand, a situation that two or more effective responses exist for one operation of the user is caused. Specifically, gesture filtering can be added into a gesture recognizing system, and when the system bar is hidden, a series of action events classified starting from a certain pixel area under the screen are filtered out, so that the current application does not respond to the second input.

In the method for controlling a system bar of a user equipment provided by the embodiment of the present invention, by flexibly invoking or hiding a system bar integrated with various information and/or convenient buttons, the screen can be used to display content to the greatest extent, so as to improve the utilization rate of the screen, thereby improving the user experience.

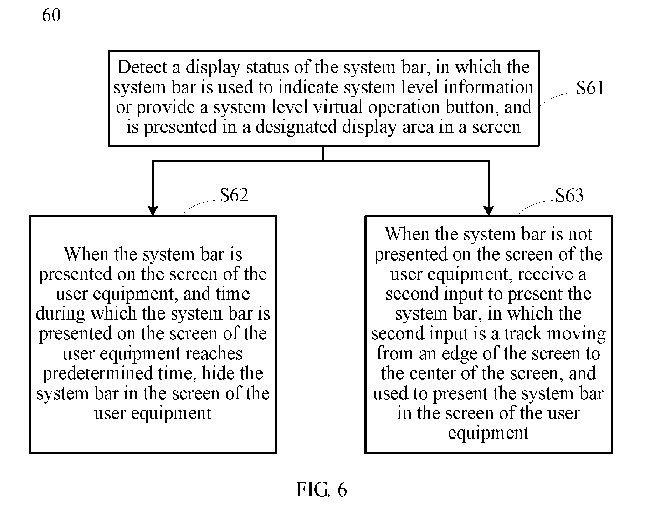

FIG. 6 is a schematic flow chart of a method for controlling a system bar of a user equipment according to another embodiment of the present invention. The method 60 includes the following content.

S61: Detect a display status of the system bar, in which the system bar is used to indicate system level information or provide a system level virtual operation button, and is presented in a designated display area in a screen.

There are two types of display statuses of the system bar, including: being presented on the screen of the user equipment and being not presented on the screen of the user equipment. The display area presented in the system bar can be an area extending from an edge of the screen to the center of the screen, such as a rectangular area extending upward from a lower bottom side of an edge of the screen, and both the left and right sides of the rectangular area can be aligned with both the left and right sides of an edge of the screen.

S62: When the system bar is presented on the screen of the user equipment, and time during which the system bar is presented on the screen of the user equipment reaches predetermined time, hide the system bar in the screen of the user equipment.

Alternatively, S63: when the system bar is not presented on the screen of the user equipment, receive a second input to present the system bar, in which the second input is a track moving from an edge of the screen to the center of the screen, and used to present the system bar in the screen of the user equipment.

Referring to FIG. 1C, a second input 18 is a track moving from any point on an edge of the screen 19 to the center of the screen. A threshold can be set for the length of the track, so as to avoid a faulty operation. When the user equipment receives the second input, the system bar 10 shown in FIG. 1B is presented.

In the method for controlling a system bar of a user equipment provided by the embodiment of the present invention, by flexibly invoking or hiding a system bar integrated with various information and/or convenient buttons, the screen can be used to display content to the greatest extent, so as to improve the utilization rate of the screen, thereby improving the user experience.

Optionally, that time during which the system bar is presented on the screen of the user equipment reaches predetermined time includes: that time during which the system bar is presented on the screen of the user equipment reaches the predetermined time; and/or that the system bar does not receive any input in the predetermined time.

Optionally, after receiving a second input which is input by an input unit, the method further includes: presenting, by the screen, the system bar, and adaptively zooming out and presenting, by the screen, the currently presented content; or presenting, by the screen, the system bar, and covering, by the screen, a presented part of the currently presented content by using the system bar.

Optionally, the display area of the system bar is located in a designated area expanding upward from a lower edge of the screen.

Optionally, that the second input is a track moving from an edge of the screen to the center of the screen includes: that the second input is a track moving from bottom to top by taking the lower edge of the screen as a starting point.

Optionally, at the time of receiving the second input, a current application is screened from receiving the second input, so as to prevent a response of the current application to the second input from being triggered.

Optionally, the screen of the user equipment is a touch-type input screen.

In the method for controlling a system bar of a user equipment provided by the embodiment of the present invention, by flexibly invoking or hiding a system bar integrated with various information and/or convenient buttons, the screen can be used to display content to the greatest extent, so as to improve the utilization rate of the screen, thereby improving the user experience.

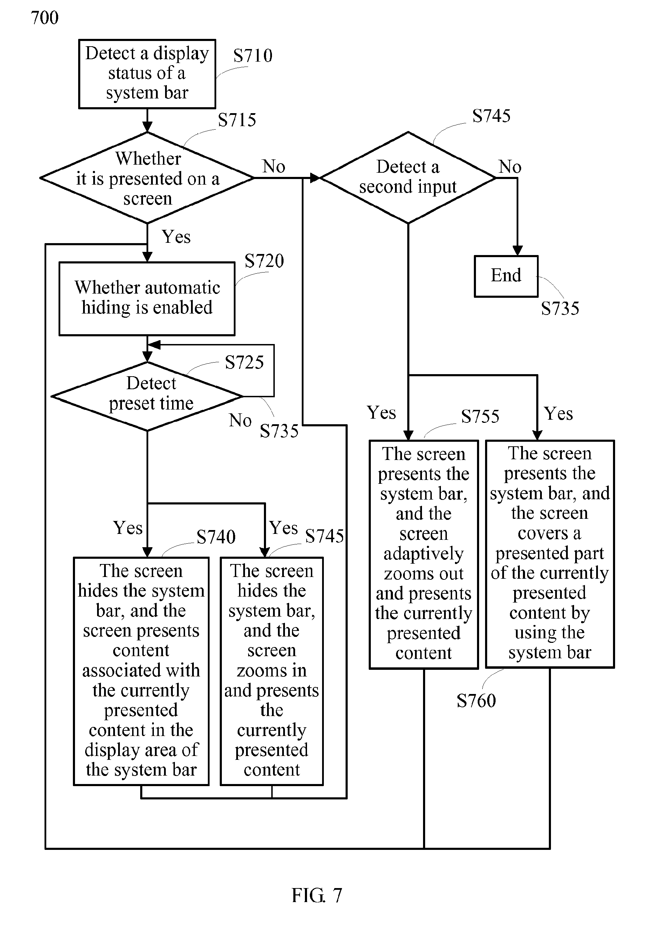

FIG. 7 is a schematic flow chart of a method 700 for controlling a system bar of a user equipment according to an embodiment of the present invention. The presentation method 700 includes the following content.

S710: Detect a display status of a system bar.

S715: Determine whether the system bar is presented on a screen. If the system bar is presented on the screen, that is, "yes" in S715, S720 is executed. If the system bar is not presented on the screen, that is, "no" in S715, the step S745 is executed.

S720: Determine whether automatic hiding is enabled.

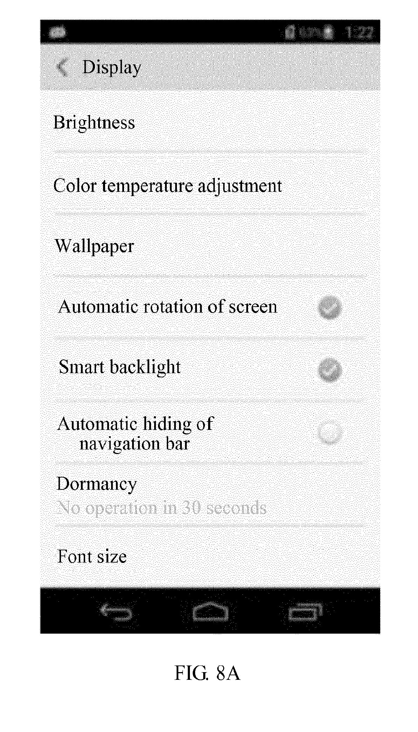

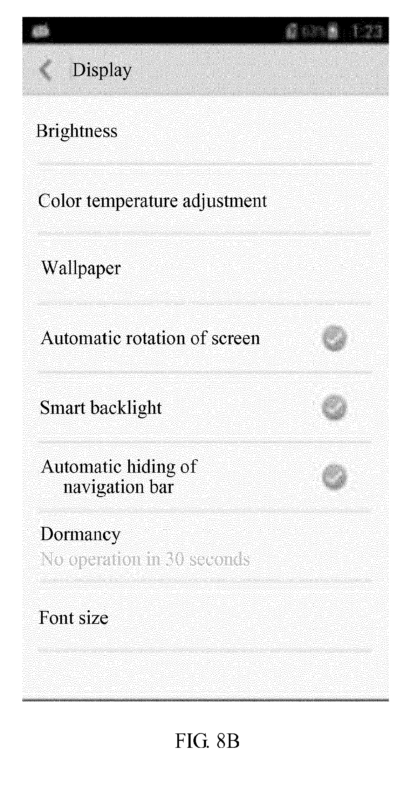

Referring to FIG. 8A and FIG. 8B, FIG. 8A shows a status of system setting when the automatic hiding is not enabled, and FIG. 8B shows a status of the system setting when the automatic hiding is enabled. Specifically, whether an option menu of "automatically hiding the system bar" and some other relevant parameters are enabled can all be configured in a parameter configuration file of a system, such as
<integer settings.system.show_navigationbar_checkbox="1"/>
//whether to start the option menu of "automatically hiding the system bar".
<integer settings.system.auto_hide_navigationbar_enable="0"/>
//whether to automatically hide the system bar by default.
<integer settings.system.auto_hide_navigationbar_timeout="2000"/>
//how soon will the system bar be automatically hidden.
<integer settings.system.navigationbar_height_min="4"/>
//the minimum height of the system bar during portrait.
<integer settings.system.navigationbar_width_min="4"/>
//the minimum width of the system bar during landscape.

S725: Detect preset time.

When the system bar is called out, or shown up, a timer in the system begins time recording, and step S725 is to determine whether the time recorded by the timer reaches the preset time (the parameter of "how soon will the system bar be automatically hidden" in the foregoing code).

S735: No, that is, if the time recorded by the timer does not reach the preset time, or in the time recording procedure of the timer, the user performs another input or operation, perform time recording again, and return back to step S725 to continue detecting the preset time.

S740: The screen hides the system bar, and the screen presents content associated with the currently presented content in the display area of the system bar.

S745: the screen hides the system bar, and the screen zooms in and presents the currently presented content.

Step S740 and step S745 are basically the same as step S340 and step S345 in the foregoing FIG. 3, and no more details are given herein. Specifically, for the situation of S745, when the system bar is hidden, the currently presented content is abruptly zoomed in and presented, but the system bar may move downward slowly until it is hidden, so as to result in a problem of inconsistent animations, thereby influencing user experience. The returning animation of the system bar can be set to 0 through a method of directly modifying the selectAnimationLw parameter of the PhoneWindowManager, so that an application window and the system bar are adjusted in place simultaneously.

After step S740 or S745, the system bar is hidden on the screen, which is the same as the circumstance of "no" in S715, and subsequently S745 is executed. The foregoing procedure can be executed cyclically.

Specifically, a set of maximum Max width and height and minimum Min width and height of a navigation bar can be added into the PhoneWindowManager. When the navigation bar is displayed, the Max width and height is used for display, and when the navigation bar needs to be hidden, the Min width and height is used for display (actually the entire navigation bar moves to the outside of the screen, so that the navigation bar only displays the Min width and height on the screen). A reevaluateStatusBarSize (reevaluateStatusBarSize) method is added into a WindowManagerFuncs (WindowManagerFuncs) interface and used to refresh the width and the height of the navigation bar. The method is implemented in the WindowManagerService (WindowManagerService). An event broadcast receiver is added into the PhoneWindowManager, to process an event which triggers changes of the width and the height of the navigation bar, and when the width and the height of the navigation bar need to be changed, the reevaluateStatusBarSize method is invoked to refresh the window. a broadcast message for triggering the display of the navigation bar is added into the event processing of a system user interface SystemUI (when the navigation bar is hidden, actually the navigation bar with the Min width and height is still in a visible area of the screen, so the message can still be received).

S745: Detect a second input.

The second input is an input used to present the system bar in the screen of the user equipment and defined in the embodiment of the present invention. The second input is a track moving from an edge of the screen to the center of the screen. Optionally, the second input approximating to the use habit of a user may be a track moving from bottom to top by taking the lower edge of the screen as a starting point, as 49 in FIG. 4A and 59 in FIG. 5A. Similarly, the second input can be a track moving from top to bottom by taking the topmost edge of the screen as a starting point, or a track moving from left to right by taking the leftmost side edge of the screen as a starting point, or a track moving from right to left by taking the rightmost side edge of the screen as a starting point.

If the screen of the user equipment is a touch-type input screen, the second input is a section of a touch track extending to the center of the screen by taking any point on an edge of the screen as a starting point.

When the second input is detected, that is, "yes" in S745, S755 or S760 is executed. If the second input is not detected, that is, "no" in S745, S735 is executed. S755: The screen presents the system bar, and the screen adaptively zooms out and presents the currently presented content. Step S745 and step S755 are executed in sequence, and reference can be made to presentation changes in FIG. 5B and FIG. 5A. When the system bar occurs in the screen, the user can conveniently perform a further operation, or view relevant information.

S760: The screen presents the system bar, and the screen covers a presented part of the currently presented content by using the system bar. Step S745 and step S760 are executed in sequence, and reference can be made to presentation changes in FIG. 4B and FIG. 4A. Referring to FIG. 4A, after the second input is received, the presentation manner of the currently presented content is not changed, and only the part of content 46 located in the display area of the system bar in FIG. 4B is hidden in FIG. 4A.

After the second input is detected, a presentation result in S755 and a presentation result in S760 differ. The difference is that preset presentation results arc different because the currently presented content is different. Similar to the list of FIG. 4B, the currently presented content can further include an Email, a short message, an address book or a webpage. The presentation method after the second input is received is already preset for the interface including the foregoing content, so the presentation result shown in FIG. 4A is presented in S760. Similarly, similar to the photograph of FIG. 5B, the currently presented content can further include a calendar or a video. The presentation method after the second input is received is already preset for the interface including the foregoing content, so the presentation result shown in FIG. 5A is presented in S755.

Specifically, for the situation of S755, when the system bar is displayed, the currently presented content is abruptly shrunk, and a black edge is left, but the system bar may move upward slowly until it is fully presented, so as to result in a problem of inconsistent animations, thereby influencing user experience. The returning animation of the system bar can be set to 0 through a method of directly modifying the selectAnimationLw parameter of the PhoneWindowManager, so that an application window and the system bar are adjusted in place simultaneously.

After step S755 or S760, the screen presents the system bar, which is the same as the circumstance of "yes" in S715, and subsequently S720 is executed. The foregoing procedure can be executed cyclically.

In addition, when the user initiates the second input, after the NavigationBarPolicy recognizes a gesture, the system bar may be triggered and popped out, but the second input may also be sent to current active applications simultaneously. If at this time, there is a key at a location where the user raises a hand, a situation that two or more effective responses exist for one operation of the user is caused. Specifically, gesture filtering can be added into a deliverPointerEvent method for ViewRootImpl, and when the system bar is hidden, a series of action events classified starting from a certain pixel area under the screen are filtered out, so that the current application does not respond to the second input.

In addition, in order to further improve the user experience, it can be set that during the landscape in an application such as a map depot, the system bar can still be kept on the right, and support the automatic hiding. Under the situation where the automatic hiding of the system bar is opened, when it is just startup or unlocking, the navigation bar may be automatically hidden. The transparency of the system bar can be further modified, and the system bar is set to a semi-transparent effect, so that the interface is more beautiful when the navigation bar covers an application.

In the embodiment of the present invention, the screen range used by the user can be maximized as much as possible, and the system bar is automatically hidden after the user performs no operation in a certain duration. Furthermore, the size of the available display area of an application can be set to be unchanged when the system bar is displayed and hidden, so that it can be better compatible with an application of a third party. Furthermore, with the method of the foregoing embodiment, modification in the amount of codes of the Android system is small, and the method is easy for implementation.

In the method for controlling a system bar of a user equipment provided by the embodiment of the present invention, by flexibly invoking or hiding a system bar integrated with various information and/or convenient buttons, the screen can be used to display content to the greatest extent, so as to improve the utilization rate of the screen, thereby improving the user experience.

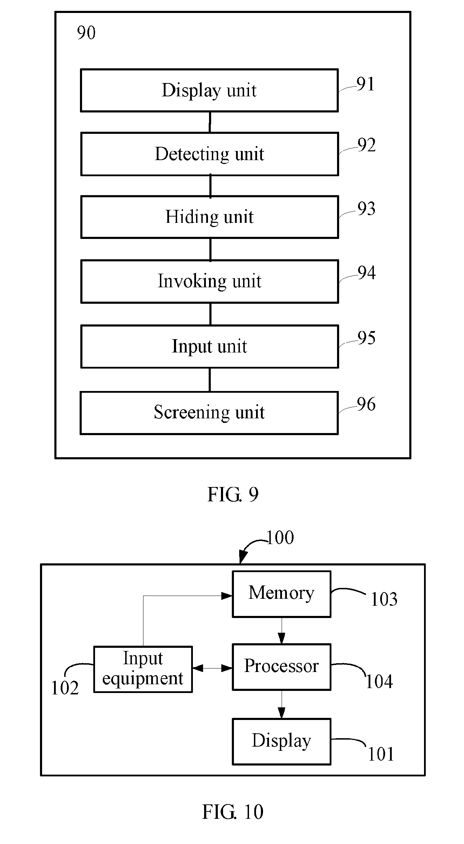

FIG. 9 is a schematic block diagram of a user equipment 90 according to an embodiment of the present invention.

The user equipment 90 includes a display unit 91, a detecting unit 92, a hiding unit 93, an invoking unit 94 and an input unit 95.

The display unit 91 presents a man-machine interaction interface of the user equipment 90 according to information sent by the hiding unit and the invoking unit.

The input unit 95 receives an external input to generate a first input and a second input and send them to the hiding unit and the invoking unit, respectively.

The detecting unit 92 detects a display status of the system bar and sends the detected display status to the hiding unit or the invoking unit, in which the system bar is used to indicate system level information or provide a system level virtual operation button, and is presented in a designated display area in the display unit 91.

When the detecting unit 92 detects the display status of the system bar sent when the system bar is presented on the display unit 91 of the user equipment 90 and the presented system bar includes a hidden button, the hiding unit 93 receives the first input used to select the hidden button and input by the input unit to send information to the display unit so that the display unit hides the system bar, in which the hidden button is used to hide the system bar in the display unit 91 of the user equipment 90; or is configured to hide the system bar in the display unit 91 of the user equipment 9090 when the detecting unit 92 detects that the system bar is presented on the display unit 91 of the user equipment 90 and time during which the system bar is presented on the screen of the user equipment 90 reaches predetermined time; or
when the detecting unit 92 detects the display status of the system bar sent when the system bar is not presented on the display unit 91 of the user equipment 90, the invoking unit 94 receives a second input which is input by the input unit to send information to the display unit so that the display unit displays the system bar, in which the second input is a track moving from an edge of the display unit 91 to the center of the display unit 91, and is used to present the system bar in the display unit 91 of the user equipment 90.

As a different embodiment, optionally, the information sent by the hiding unit is received, the display unit 91 hides the system bar, and the display unit 91 presents content associated with the currently presented content in the display area of the system bar.

Alternatively, optionally, the information sent by the hiding unit is received, the display unit 91 hides the system bar, and the display unit 91 zooms in and presents the currently presented content.

Optionally, the information sent by the invoking unit is received, the display unit 91 presents the system bar, and the display unit 91 adaptively zooms out and presents the currently presented content.

Alternatively, optionally, the information sent by the invoking unit is received, the display unit 91 presents the system bar, and the display unit covers a presented part of the currently presented content by using the system bar.

Optionally, the display area of the system bar presented by the display unit 91 is located in a designated area expanding upward from a lower edge of the display unit.

Optionally, the second input used by the invoking unit is a track moving from bottom to top by taking the lower edge of the display unit 91 as a starting point.

Optionally, the display unit 91 of the user equipment 90 is a touch-type input screen. When the display unit 91 of the user equipment 90 is a touch-type input screen, the touch-type input screen is both the display unit 91 of the user equipment 90 and the input unit 95 of the user equipment 90.

Optionally, the user equipment 90 may further include a screening unit 96, in which the screening unit 96 is configured to screen, at the time of receiving the second input sent by the input unit 95, a current application from receiving the second input, so as to prevent a response of the current application to the second input from being triggered. Specifically, when receiving a gesture sensed by the input unit 95 and determining that the gesture is the second input, the screening unit 96 filters out the second input, so that the current application does not respond to the second input.

The user equipment 90 implements the foregoing method 20 or 300, and the method in which the user equipment 90 presents the system bar is illustrated with reference to FIG. 3 below.

S310: A detecting unit detects a display status of a system bar.

S315: The detecting unit determines whether the system bar is presented on a display unit. If the system bar is presented on the display unit, that is, "yes" in S315, the detecting unit sends the result to the display unit so that the display unit executes S320. If the system bar is not presented on the display unit, that is, "no" in S315, the display unit executes step S345.

S320: The system bar presented on the display unit includes a hidden button.

Referring to FIG. 4A, FIG. 4A is a first schematic screenshot of a display unit of a user equipment according to an embodiment of the present invention. A display unit 41, a system bar 42, and a plurality of schematic system level virtual operation buttons 43 and system level information 44 included by the system bar are shown in FIG. 4. In addition, the presented system bar further includes a hidden button 45. By selecting the hidden button, the system bar can be hidden, that is, the system bar is hidden in the display unit of the user equipment.

S325: A hiding unit detects the first input generated by the input unit.

The first input is an input used to select the hidden button 45. When the hiding unit receives the first input which is input by the input unit, that is, "yes" in S325, S340 or S345 is executed. If the hiding unit does not receive the first input which is input by the input unit, that is, "no" in S325, S335 is executed. Optionally, when the display unit of the user equipment is a touch-type input screen, the display unit is not only used for displaying, but also user input. A click input performed by a user on the hidden button 45 on the display unit is received, and therefore the input unit of the user equipment generates the first input and outputs the first input to the hiding unit.

S335: End. In the step, the presentation method of the system bar of the user equipment ends, and the current display content on the display unit remains unchanged.

S340: The hiding unit enables the display unit to hide the system bar, and the display unit presents content associated with the currently presented content in the display area of the system bar.

In FIG. 4A, the currently presented content of the display unit is a list, and a part of content 46 shielded exists in the display area of the system bar 42. After the hiding unit receives the first input through S325, reference is made to FIG. 4B. FIG. 4B is a second schematic screenshot of a display unit of a user equipment according to an embodiment of the present invention. It can be seen from FIG. 4B that, some other content 46 of the list is presented in the area shielded by the display area of the system bar 42 in FIG. 4A, so that the user can utilize the display unit maximally to present content, so as to improve user experience.

Alternatively, S345: the display unit hides the system bar, and the display unit zooms in and presents the currently presented content.

FIG. 5A is a third schematic screenshot of a display unit of a user equipment according to another embodiment of the present invention. A display unit 51, a system bar 52, and a schematic system level virtual operation button 53 and system level information 54 included by the system bar are shown in FIG. 5 likewise. In addition, the presented system bar further includes a hidden button 55. Content schematically presented in the drawing is a photograph, which is fully presented on the upper interface of the display area of the system bar. After the hiding unit receives the first input through S325, reference is made to FIG. 5B. FIG. 5B is a fourth schematic screenshot of a display unit of a user equipment according to an embodiment of the present invention. It can be seen from FIG. 5B that, the currently presented content in FIG. 5A, that is, the photograph, is zoomed in and presented, so that the user can utilize the display unit maximally to present the current content, so as to improve user experience.

After the hiding unit detects the first input, a presentation result in S340 and a presentation result in S345 differ. The difference is that preset presentation results are different because the currently presented content is different. Similar to the list of FIG. 4A, the currently presented content can further include an Email, a short message, an address book or a webpage. The presentation method after the first input is received is already preset for the interface including the foregoing content, so the presentation result shown in FIG. 4B is presented in S340. Similarly, similar to the photograph of FIG. 5A, the currently presented content can further include a calendar or a video. The presentation method after the first input is received is already preset for the interface including the foregoing content, so the presentation result shown in FIG. 5B is presented in S340.

After step S340 or S345, the display unit hides the system bar, which is the same as the circumstance of "no" in S315, and subsequently S345 is executed. The foregoing procedure can be executed cyclically.

S345: An invoking unit detects the second input generated by the input unit.

The second input is an input used to present the system bar in the display unit of the user equipment and defined in the embodiment of the present invention. The second input generated by the input unit and output to the invoking unit is a track moving from an edge of the display unit to the center of the display unit. Optionally, the second input approximating to the use habit of the user may be a track moving from bottom to top by taking the lower edge of the display unit as a starting point, as 49 in FIG. 4A and 59 in FIG. 5A. Similarly, the second input can be a track moving from top to bottom by taking the topmost edge of the display unit as a starting point, or a track moving from left to right by taking the leftmost side edge of the display unit as a starting point, or a track moving from right to left by taking the rightmost side edge of the display unit as a starting point.

If the display unit of the user equipment is a touch-type input screen, the second input which is input by the input unit and received by the invoking unit is a section of a touch track extending to the center of the display unit by taking any point on an edge of the display unit as a starting point.

When the invoking unit receives the second input, that is, "yes" in S345, S355 or S360 is executed. If the invoking unit does not receive the second input, that is, "no" in S345, S335 is executed. S355: The display unit presents the system bar, and the display unit adaptively zooms out and presents the currently presented content. Step S345 and step S355 are executed in sequence, and reference can be made to presentation changes in FIG. 5B and FIG. 5A. When the system bar appears on the display unit, the user can conveniently perform a further operation, or view relevant information.

S360: The invoking unit enables the display unit to present the system bar, and the display unit covers a presented part of the currently presented content by using the system bar. Step S345 and step S360 are executed in sequence, and reference can be made to presentation changes in FIG. 4B and FIG. 4A. Referring to FIG. 4A, after the invoking unit receives the second input, only the part of content 46 located in the display area of the system bar in FIG. 4B is hidden in FIG. 4A.

After the second input is detected, a presentation result in S355 and a presentation result in S360 differ. The difference is that preset presentation results are different because the currently presented content is different. Similar to the list of FIG. 4B, the currently presented content can further include an Email, a short message, an address book or a webpage. The presentation method after the second input is received is already preset for the interface including the foregoing content, so the presentation result shown in FIG. 4A is presented in S360. Similarly, similar to the photograph of FIG. 5B, the currently presented content can further include a calendar or a video. The presentation method after the second input is received is already preset for the interface including the foregoing content, so the presentation result shown in FIG. 5A is presented in S355.

After step S355 or S360, the display unit presents the system bar, which is the same as the circumstance of "yes" in S315, and subsequently S320 is executed. The foregoing procedure can be executed cyclically.

Likewise, the user equipment 90 can also implement the foregoing method 60 or 700. For details, reference can be made to the method in which the user equipment 90 implements the method 20 or 300, and no more details are given here.

FIG. 10 is a schematic block diagram of a user equipment 100 according to another embodiment of the present invention.

The user equipment 100 at least includes the following apparatuses: a display 101, an input equipment 102, a memory 103 and a processor 104.

The display 101 can be an appropriate apparatus such as a cathode ray tube (CRT, Cathode Ray Tube) display and a liquid crystal (LCD, Liquid Crystal Display) display, and a graphical user interface can be presented on the screen of the display.

The input equipment 102 can include any appropriate apparatus such as a keyboard, a mouse, a track recognizer, and a voice identify interface, which is configured to receive the input of a user, and send the input to the processor.

Particularly, when the user equipment 100 is a touch-type interacting terminal, the interactive touch screen can be not only the screen of the display 101, but also can be the input equipment 102.

In addition, the memory 103 can include a RAM and a ROM, or be any fixed storage medium, or a movable storage medium, which is configured to store a program capable of executing an embodiment of the present invention or data to be processed in an embodiment of the present invention.

The processor 104 is configured to execute the program of the embodiment of the present invention stored by the memory 103, and communicate with another apparatus in a bidirectional manner through a bus.

The memory 103 and the processor 104 can also be integrated into a physical module to which the embodiment of the present invention is applied, and the program for implementing the embodiment of the present invention is stored and run on the physical module.

The processor 104 of the user equipment 100 detects a display status of the system bar, in which the system bar is used to indicate system level information or provide a system level virtual operation button, and is presented in a designated display area in the screen of the display 101.

When detecting that the system bar is presented on the display 101 of the user equipment and the presented system bar includes a hidden button, the processor 104 receives the first input used to select the hidden button and input by the input equipment 102 to hide the system bar, in which the hidden button is used to hide the system bar in the screen of the display 101 of the user equipment; or when detecting that the system bar is not presented on the screen of the user equipment, the processor 101 receives the second input which is input by the input equipment 102 to display the system bar, where the second input is a track moving from an edge of the screen to the center of the screen, and is used to enable the system bar to be presented in the screen of the user equipment.

As a different embodiment, optionally, the processor 104 enables the screen of the display 101 to hide the system bar, and the screen presents content associated with the currently presented content in the display area of the system bar.

Alternatively, optionally, the processor 104 enables the screen to hide the system bar, and the screen zooms in and presents the currently presented content.

Optionally, the processor 104 enables the screen to present the system bar, and the screen adaptively zooms out and presents the currently presented content.

Alternatively, optionally, the processor 104 enables the screen to present the system bar, and the screen covers a presented part of the currently presented content by using the system bar.

Optionally, the display area of the system bar presented by the screen is located in a designated area expanding upward from a lower edge of the screen.

Optionally, the second input used by the processor 104 is a track moving from bottom to top by taking the lower edge of the screen as a starting point.

Optionally, the screen of the display 101 of the user equipment is a touch-type input screen. When the screen of the display 101 of the user equipment is a touch-type input screen, both presentation and input functions of the user equipment are completed by the touch-type input screen.

The method in which the user equipment 100 presents the system bar is illustrated with reference to FIG. 3 below.

S310: A processor invokes a program for executing the embodiment of the present invention and stored by a memory, and detects a display status of the system bar.

S315: The processor determines whether the system bar is presented on a screen. If the system bar is presented on the screen, that is, "yes" in S315, the processor sends the result to the display to enable the display to execute S320. If the system bar is not presented on the screen, that is, "no" in S315, the processor enables the display to execute step S345.

S320: The system bar presented on the screen of the display includes a hidden button.

Referring to FIG. 4A, FIG. 4A is a first schematic screenshot of a screen of a user equipment according to an embodiment of the present invention. A screen 41, a system bar 42, and a plurality of schematic system level virtual operation buttons 43 and system level information 44 included by the system bar are shown in FIG. 4. In addition, the presented system bar further includes a hidden button 45. By selecting the hidden button, the system bar can be hidden, that is, the system bar is hidden in the screen of the user equipment.

S325: The processor detects the first input generated by the input equipment.

The first input is an input used to select the hidden button 45. When the processor receives the first input of the input equipment, that is, "yes" in S325, S340 or S345 is executed. If the processor does not receive the first input which is input by the input equipment, that is, "no" in S325, S335 is executed. Optionally, when the screen of the user equipment is a touch-type input screen, the screen is not only used for displaying, but also used for receiving an input. A click input performed by a user on the hidden button 45 on the screen is received, and therefore the input equipment of the user equipment generates the first input and outputs the first input to the processor.

S335: End. In the step, the presentation method of the system bar ends, and the current display content on the screen remains unchanged.

S340: The processor enables the screen to hide the system bar, and the screen presents content associated with the currently presented content in the display area of the system bar.

In FIG. 4A, the currently presented content of the screen is a list, and a part of content 46 shielded exists in the display area of the system bar 42. After the processor detects the first input through S325, reference is made to FIG. 4B. FIG. 4B is a second schematic screenshot of a screen of a user equipment according to an embodiment of the present invention. It can be seen from FIG. 4B that, some other content 46 of the list is presented in the area shielded by the display area of the system bar 42 in FIG. 4A, so that the user can utilize the screen maximally to present content, so as to improve user experience.

Alternatively, S345: the processor enables the screen to hide the system bar, and the screen zooms in and presents the currently presented content.

FIG. 5A is a third schematic screenshot of a screen of a user equipment according to another embodiment of the present invention. A screen 51, a system bar 52, and a schematic system level virtual operation button 53 and system level information 54 included by the system bar are shown in FIG. 5 likewise. In addition, the presented system bar further includes a hidden button 55. Content schematically presented in the drawing is a photograph, which is fully presented on the upper interface of the display area of the system bar. After the processor detects the first input through S325, reference is made to FIG. 5B. FIG. 5B is a fourth schematic screenshot of a screen of a user equipment according to an embodiment of the present invention. It can be seen from FIG. 5B that, the currently presented content in FIG. 5A, that is, the photograph, is zoomed in and presented, so that the user can utilize the screen maximally to present the current content, so as to improve user experience.

After the processor detects the first input, a presentation result in S340 and a presentation result in S345 differ. The difference is that preset presentation results are different because the currently presented content is different. Similar to the list of FIG. 4A, the currently presented content can further include an Email, a short message, an address book or a webpage. The presentation method after the first input is received is already preset for the interface including the foregoing content, so the presentation result shown in FIG. 4B is presented in S340. Similarly, similar to the photograph of FIG. 5A, the currently presented content can further include a calendar or a video. The presentation method after the first input is received is already preset for the interface including the foregoing content, so the presentation result shown in FIG. 5B is presented in S340.

After step S340 or S345, the system bar is hidden on the screen, which is the same as the circumstance of "no" in S315, and subsequently S345 is executed. The foregoing procedure can be executed cyclically.

S345: The processor detects the second input generated by the input equipment.

The second input is an input used to present the system bar in the screen of the user equipment and defined in the embodiment of the present invention. The second input is a track moving from an edge of the screen to the center of the screen. Optionally, the second input approximating to the use habit of the user may be a track moving from bottom to top by taking the lower edge of the screen as a starting point, as 49 in FIG. 4A and 59 in FIG. 5A. Similarly, the second input can be a track moving from top to bottom by taking the topmost edge of the screen as a starting point, or a track moving from left to right by taking the leftmost side edge of the screen as a starting point, or a track moving from right to left by taking the rightmost side edge of the screen as a starting point.

If the screen of the user equipment is a touch-type input screen, the second input which is input by the input equipment and received by the processor is a section of a touch track extending to the center of the screen by taking any point on an edge of the screen as a starting point.

When the processor detects the second input, that is, "yes" in S345, S355 or S360 is executed. If the processor does not detect the second input, that is, "no" in S345, S335 is executed. S355: The screen presents the system bar, and the screen adaptively zooms out and presents the currently presented content. Step S345 and step S355 are executed in sequence, and reference can be made to presentation changes in FIG. 5B and FIG. 5A. When the system bar appears on the screen, the user can conveniently perform a further operation, or view relevant information.

S360: The processor enables the screen to presents the system bar, and the screen covers a presented part of the currently presented content by using the system bar. Step S345 and step S360 are executed in sequence, and reference can be made to presentation changes in FIG. 4B and FIG. 4A. Referring to FIG. 4A, after the second input is received, only the part of content 46 located in the display area of the system bar in FIG. 4B is hidden in FIG. 4A.

After the second input is detected, a presentation result in S355 and a presentation result in S360 differ. The difference is that preset presentation results are different because the currently presented content is different. Similar to the list of FIG. 4B, the currently presented content can further include an Email, a short message, an address book or a webpage. The presentation method after the second input is received is already preset for the interface including the foregoing content, so the presentation result shown in FIG. 4A is presented in S360. Similarly, similar to the photograph of FIG. 5B, the currently presented content can further include a calendar or a video. The presentation method after the second input is received is already preset for the interface including the foregoing content, so the presentation result shown in FIG. 5A is presented in S355.

After step S355 or S360, the screen presents the system bar, which is the same as the circumstance of "yes" in S315, and subsequently S320 is executed. The foregoing procedure can be executed cyclically.

Likewise, the user equipment 100 can also implement the foregoing method 60 or 700. For details, reference can be made to the method in which the user equipment 100 implements the method 20 or 300, and no more details are given here.

The embodiment of the present invention provides a user equipment, and by flexibly invoking or hiding the system bar integrated with various information and/or convenient buttons, the user equipment can enable the screen to be used to display content to the greatest extent, so as to improve the utilization rate of the screen, thereby improving the user experience.

The user equipment can be various terminal equipments, and specially be a mobile apparatus, such as a PAD, a smart phone, and a multimedia machine. The mobile equipment generally adopts a touch-type input screen for convenience of carrying, and intends to utilize the screen maximally in order to satisfy visual enjoyment of the user. Therefore, by flexibly invoking or hiding a system bar integrated with various information and/or convenient buttons, the user equipment in the embodiment of the present invention can enable the screen to be used to display content to the greatest extent, so as to improve the utilization rate of the screen, thereby improving the user experience.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for the detailed working process of the foregoing system, apparatus, and unit, reference may be made to the corresponding process in the foregoing method embodiments, and the details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk.

The foregoing description is merely about specific embodiments of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling a system bar of a user equipment, comprising:
detecting a display status of the system bar, wherein the system bar is used to indicate system level information or provide a system level virtual operation button, and is presented in a designated display area in a screen; and
when the system bar is presented on the screen of the user equipment, and the presented system bar comprises a hidden button, receiving a first input used to select the hidden button to hide the system bar, wherein the hidden button is used to hide the system bar in the screen of the user equipment; or
when the system bar is not presented on the screen of the user equipment, receiving a second input to present the system bar, wherein the second input is a track moving from an edge of the screen to the center of the screen, and used to present the system bar in the screen of the user equipment.

2. The method according to claim 1, wherein after receiving the first input for selecting the hidden button and input by an input unit, the method further comprises:
hiding, by the screen, the system bar, and presenting, by the screen, content associated with currently presented content in the display area of the system bar; or
hiding, by the screen, the system bar, and zooming in and presenting, by the screen, currently presented content.

3. The method according to claim 1, wherein after receiving the second input which is input by an input unit, the method further comprises:
presenting, by the screen, the system bar, and adaptively zooming out and presenting, by the screen, currently presented content; or
presenting, by the screen, the system bar, and covering, by the screen, a presented part of currently presented content by using the system bar.

4. The method according to any one of claims 1 to 3, wherein the display area of the system bar is located in a designated area expanding upward from a lower edge of the screen.

5. The method according to any one of claims 1 to 4, wherein that the second input is a track moving from an edge of the screen to the center of the screen comprises:
that the second input is a track moving from bottom to top by taking the lower edge of the screen as a starting point.

6. The method according to any one of claims 1 to 5, wherein at the time of receiving the second input, a current application is screened from receiving the second input, so as to prevent a response of the current application to the second input from being triggered.

7. The method according to any one of claims 1 to 6, wherein the screen of the user equipment is a touch-type input screen.

8. A method for controlling a system bar of a user equipment, comprising:
detecting a display status of the system bar, wherein the system bar is used to indicate system level information or provide a system level virtual operation button, and is presented in a designated display area in a screen; and
when the system bar is presented on the screen of the user equipment, and time during which the system bar is presented on the screen of the user equipment reaches predetermined time, hiding the system bar in the screen of the user equipment; or
when the system bar is not presented on the screen of the user equipment, receiving a second input to present the system bar, wherein the second input is a track moving from an edge of the screen to the center of the screen, and used to present the system bar in the screen of the user equipment.

9. The method according to claim 8, wherein that time during which the system bar is presented on the screen of the user equipment reaches predetermined time comprises:
that the time during which the system bar is presented on the screen of the user equipment reaches the predetermined time, and/or
that the system bar does not receive any input in the predetermined time.

10. The method according to claim 8, wherein the hiding the system bar in the screen of the user equipment comprises:
hiding, by the screen, the system bar, and presenting, by the screen, content associated with currently presented content in the display area of the system bar; or
hiding, by the screen, the system bar, and zooming in and presenting, by the screen, currently presented content.

11. The method according to claim 8, wherein after receiving the second input which is input by an input unit, the method further comprises:
presenting, by the screen, the system bar, and adaptively zooming out and presenting, by the screen, currently presented content; or
presenting, by the screen, the system bar, and covering, by the screen, a presented part of currently presented content by using the system bar.

12. The method according to any one of claims 8 to 11, wherein the display area of the system bar is located in a designated area expanding upward from a lower edge of the screen.

13. The method according to any one of claims 8 to 12, wherein that the second input is a track moving from an edge of the screen to the center of the screen comprises:
that the second input is a track moving from bottom to top by taking the lower edge of the screen as a starting point.

14. The method according to any one of claims 8 to 13, wherein at the time of receiving the second input, a current application is screened from receiving the second input, so as to prevent a response of the current application to the second input from being triggered.

15. The method according to any one of claims 8 to 14, wherein the screen of the user equipment is a touch-type input screen.

16. A user equipment, comprising a display unit, a detecting unit, a hiding unit, an invoking unit and an input unit, wherein
the display unit is configured to present a man-machine interaction interface of the user equipment according to information sent by the hiding unit and the invoking unit;
the input unit is configured to receive an external input to generate a first input and a second input and send them to the hiding unit and the invoking unit, respectively;
the detecting unit is configured to detect a display status of a system bar and send the detected display status to the hiding unit or the invoking unit, wherein the system bar is used to indicate system level information or provide a system level virtual operation button, and is presented in a designated display area in the display unit; and
the hiding unit is configured to, when the detecting unit detects the display status of the system bar sent when the system bar is presented on the display unit of the user equipment and the presented system bar comprises a hidden button, receive a first input used to select the hidden button and input by the input unit to send information to the display unit so that the display unit hides the system bar, wherein the hidden button is used to hide the system bar in the display unit of the user equipment; or configured to hide the system bar in the display unit of the user equipment when the detecting unit detects that the system bar is presented on the display unit of the user equipment and time during which the system bar is presented on a screen of the user equipment reaches predetermined time; or
the invoking unit is configured to, when the detecting unit detects the display status of the system bar sent when the system bar is not presented on the display unit of the user equipment, receive a second input which is input by the input unit to send information to the display unit so that the display unit displays the system bar, wherein the second input is a track moving from an edge of the display unit to the center of the display unit, and is used to present the system bar in the display unit of the user equipment.

17. The user equipment according to claim 16, wherein
the information sent by the hiding unit is received, the display unit hides the system bar, and the display unit presents content associated with currently presented content in the display area of the system bar; or
the information sent by the hiding unit is received, the display unit hides the system bar, and the display unit zooms in and presents currently presented content.

18. The user equipment according to claim 16, wherein
the information sent by the invoking unit is received, the display unit presents the system bar, and the display unit adaptively zooms out and presents currently presented content; or
the information sent by the invoking unit is received, the display unit presents the system bar, and the display unit covers a presented part of currently presented content by using the system bar.

19. The user equipment according to any one of claims 16 to 18, wherein the display area of the system bar presented by the display unit is located in a designated area expanding upward from a lower edge of the display unit.

20. The user equipment according to any one of claims 16 to 19, wherein the second input used by the invoking unit is a track moving from bottom to top by taking the lower edge of the display unit as a starting point.

21. The user equipment according to any one of claims 16 to 20, further comprising a screening unit, wherein the screening unit is configured to, at the time of receiving the second input sent by the input unit, screen a current application from receiving the second input, so as to prevent a response of the current application to the second input from being triggered.

22. The user equipment according to any one of claims 16 to 21, wherein the display unit of the user equipment is a touch-type input screen.
